# EUROPEAN PATENT SPECIFICATION

(11) **EP 3 489 743 B1**
(45) Date of publication and mention of the grant of the patent: **19.05.2021**
(21) Application number: 18207167.0
(22) Date of filing: 20.11.2018
(51) Int. Cl.: G02F 1/1335, G02F 1/1347

(54) **LIQUID CRYSTAL APPARATUS**
FLÜSSIGKRISTALLVORRICHTUNG
APPAREIL À CRISTAUX LIQUIDES

(30) Priority: 22.11.2017 JP 2017224899
(43) Date of publication of application: 29.05.2019
(73) Proprietor: Stanley Electric Co., Ltd., Meguro-ku Tokyo 153-8636 (JP)
(72) Inventor: MANO, Tomohide, Tokyo, 153-8636 (JP); TOKO, Yasuo, Tokyo, 153-8636 (JP); IWAMOTO, Yoshihisa, Tokyo, 153-8636 (JP)
(74) Representative: Carstens, Dirk Wilhelm

(56) References cited:
- EP-A1- 2 810 108
- WO-A1-2017/170400
- US-A1- 2004 021 821
- US-A1- 2004 125 430

## Description

### FIELD OF THE INVENTION

The present invention relates to a liquid crystal apparatus capable of switching between a mirror state and an image display state.

### BACKGROUND

In JP 2001-318374 A, a liquid crystal apparatus capable of switching between a mirror state and an image display state is disclosed. Specifically, there is disclosed a liquid crystal apparatus in which an image display portion that emits image light, reflective polarization means that transmits a polarized component of incident light that oscillates in a first direction, and reflects a polarized component of incident light that oscillates in a second direction orthogonal to the first direction, a transmission polarization axis variable portion capable of changing the polarization axis of incident polarized light, and absorptive polarization means that absorbs a polarized component of incident light that oscillates in the first direction, and transmits a polarized component of incident light that oscillates in the second direction, are disposed in this order.

As the transmission polarization axis variable portion, a twisted nematic (TN) liquid crystal element is used. As the absorptive polarization means, a dye polarizing plate or an iodine polarizing plate that is generally available is used. As the reflective polarization means, a wire grid polarizing plate or a multilayer film polarizing plate (JP 10-511322 A) may be used.

According to JP 2001-318374 A, with such a configuration of the liquid crystal device, a high-quality image can be displayed in the image display state, and a reflection image can be easily seen in the mirror state. In addition, in order to improve the contrast of the display image in the image display state and the reflection image in the mirror state, it is preferable that the degree of polarization of the polarization means be high (light transmittance be low), and specifically, it is preferable that the degree of polarization be within a range of 96.6% to 99.5%.

WO 2017/170400 A1 discloses a switching mirror panel having high transmittance and capable of displaying information such as characters and images in a mirror mode. This switching mirror panel is provided with, in order from the back surface side to the front surface side: a reflective type polarizing plate; a liquid crystal panel having a pair of facing substrates and a liquid crystal layer disposed between the pair of substrates; and an absorption type polarizing plate. At least one of the pair of substrates is divided into a plurality of pixel regions. Each of the plurality of pixel regions has disposed in order from the liquid crystal layer side a pixel electrode, a transparent insulating film, and a plurality of transparent wirings superimposed on the pixel electrode. The pixel electrode is electrically connected to at least one of the plurality of transparent wirings through an opening provided in the transparent insulating film. Orientation of liquid crystal molecules in the liquid crystal layer is controlled by voltage applied to the pixel electrode, thereby switching between a transparent mode and the mirror mode.

EP 2 810 108 A1 discloses an electronically dimmable optical device, including, in sequence, an active absorbing polarizer; a first static reflective polarizer; an active polarization rotator; and a second static reflective polarizer; configured so that the reflectivity and/or transmissivity of the device can be controlled (increased or decreased) by application of a voltage across the active absorbing polarizer and/or the active polarization rotator. One or more polarization levels can be selected by controlling the voltage at the active absorptive polarizer such that setting the active absorptive polarizer to a selected polarization level determines the brightness of an image produced by the device.

US 2004/125430 A1 discloses a display device which has a display unit and a display switching unit. The display switching unit is provided with a reflective polarizing plate, a liquid crystal panel, and a polarizing plate arranged in this order from the side of the display unit to the observation side. By controlling the liquid crystal panel, the display switching unit can be switched between a light transmissive state and a light reflective state. The display unit and the display switching unit are optically adhered to each other by an adhesive layer. Thus, deterioration of the contrast by boundary reflection can be restrained, and the flatness and the rigidity of the device can be improved.

US 2004/021821 A1 discloses a polarisation rotator for rotating the polarisation direction of linearly polarised light by any arbitrary angle other than 90°. The device comprises a layer of liquid crystal material disposed between alignment surfaces. In one mode, a 90° twist is induced in the liquid crystal director. An expression is provided for relating the retardation of the layer to the amount of polarisation rotation and the angle between the polarisation direction of incident light and the alignment direction at the input side of the liquid crystal layer.

### SUMMARY

According to the present invention, there is provided a liquid crystal apparatus as set forth in claim 1.

Preferred embodiments of the present invention may be gathered from the dependent claims.

The object and advantages of the invention will be realized and attained by means of the elements and combinations particularly pointed out in the claims.

It is to be understood that both the foregoing general description and the following detailed description are exemplary and are not restrictive of the invention, as claimed.

### BRIEF DESCRIPTION OF THE DRAWINGS

Fig. 1A is a diagram showing a liquid crystal apparatus Fig. 1B is a sectional view showing a liquid crystal optical element.
Fig. 2 is a diagram showing a liquid crystal apparatus .
Fig. 3 is a table summarizing changes in the light reflectance of the liquid crystal apparatus when the light transmittance of the absorptive polarizing plate is changed.
Figs. 4A to 4C are graphs showing the driving voltage dependence of the light reflectance of the liquid crystal apparatuses according to modifications 1 to 3 Modifications 1 and 2 are according to the invention.

### DESCRIPTION OF THE PREFERRED EMBODIMENTS

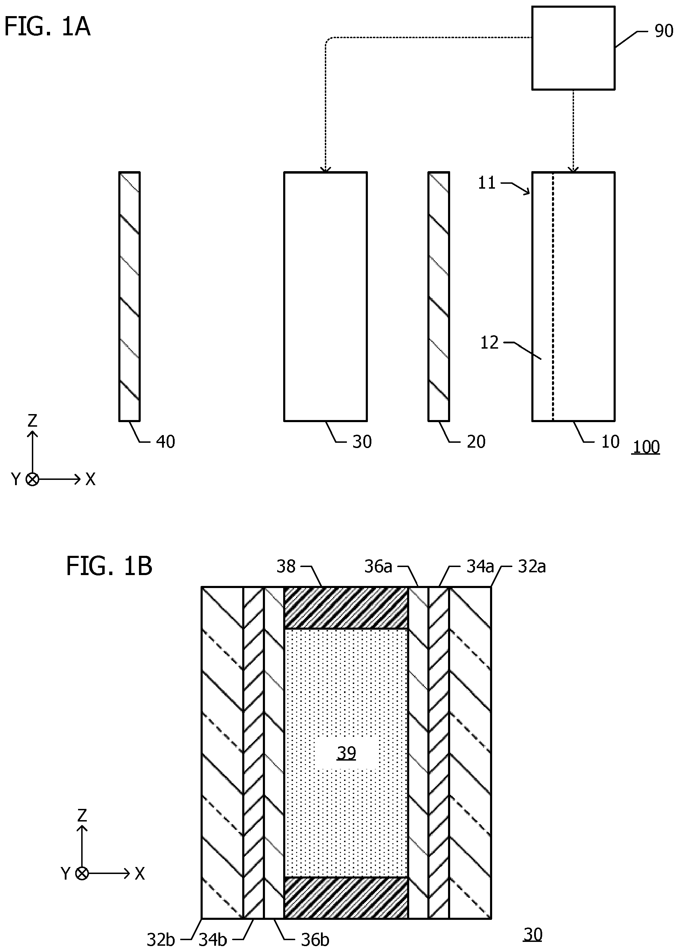

Fig. 1A is a diagram showing a liquid crystal apparatus. Here, an XYZ orthogonal coordinate system consisting of the X axis and the Y axis constituting the horizontal plane and the Z axis orthogonal to the X axis and the Y axis is set.

The liquid crystal apparatus 100 according to the first example has a configuration in which an image display device 10, a reflective polarizing plate 20, a liquid crystal optical element 30, and an absorptive polarizing plate 40 are disposed in order in the X-axis direction. The liquid crystal apparatus 100 includes a control device 90 that electrically controls the image display device 10 and the liquid crystal optical element 30.

The image display device 10 is, for example, a general TFT (Thin Film Transistor) liquid crystal monitor. Specifically, the liquid crystal display device 10 includes an illumination device (backlight), a liquid crystal cell disposed on the optical axis of the illumination device and of an active matrix type and of IPS (In-Plane Switching) type, and a pair of polarizing plates sandwiching the liquid crystal cell. The display (bright display) and non-display (dark display) of the image on the display surface 11 are controlled by the control device 90.

In the first example, the image display device 10 includes an absorptive polarizing plate 12 on the reflective polarizing plate 20 side. The absorptive polarizing plate has a polarization axis along the Z axis. Thus, light output from the image display device 10 has, for example, a polarization axis along the Z axis (mainly includes a polarized component in the Z-axis direction). In this case, the contrast ratio is higher when the image display device 10 includes an absorptive polarizing plate on the display surface side. However, since, even in a configuration in which the absorptive polarizing plate is removed, a normal level image can be displayed in the image display state, it is not necessary to include an absorptive polarizing plate on the reflective polarizing plate 20 side.

The reflective polarizing plate 20 is, for example, a multilayer film polarizing plate, and transmits a polarized component in the Z-axis direction, and reflects a polarized component in the Y-axis direction. For example, when natural light (non-polarized light) is incident, the light transmittance is 43% and the light reflectance is 45%. The polarizing plate 20 is disposed so as to face the display surface 11 of the image display device 10.

The liquid crystal optical element 30 can switch between a state in which incident linearly polarized light is transmitted while changing its polarization axis and a state in which incident linearly polarized light is transmitted without changing its polarization axis. By the control device 90, it is selected whether the polarization direction of the incident light (linearly polarized light) is rotated by, for example, 90°, or the polarization direction of the incident light is not changed. The liquid crystal optical element 30 is disposed so as to face to the polarizing plate 20.

Fig. 1B is a sectional view showing the structure of the liquid crystal optical element 30. The liquid crystal optical element 30 mainly includes a pair of electrodes 34a and 34b disposed opposite to each other, and a liquid crystal layer 39 provided between the pair of electrodes 34a and 34b.

Specifically, the pair of electrodes 34a and 34b are made of a light-transmitting conductive material such as indium tin oxide, and are provided on the surfaces of transparent glass substrates 32a and 32b, respectively. Orientation films 36a and 36b may be provided so as to cover the pair of electrodes 34a and 34b. The orientation films 36a and 36b are subjected to a uniaxial orientation treatment such as a rubbing treatment.

A seal member 38 having a frame-like overall planar shape is provided between the pair of electrodes 34a and 34b (or the substrates 32a and 32b) and at the peripheral edges thereof. In a space surrounded by the electrodes 34a and 34b and the seal member 38, for example, a twisted nematic liquid crystal material is sealed to form a liquid crystal layer 39.

In the steady state (when no voltage is applied), liquid crystal molecules close to an electrode (for example, first electrode 34a) close to the image display device 10 (Fig. 1A) are arranged along, for example, the Y-axis. Liquid crystal molecules close to an electrode (for example, second electrode 34b) distant from the image display device 10 (Fig. 1A) are arranged along, for example, the Z axis. From the first electrode 34a toward the second electrode 34b, liquid crystal molecules are arranged so as to be twisted by 90°. When a voltage is applied to the liquid crystal layer 39 via the electrodes 34a and 34b, liquid crystal molecules arranged substantially parallel to the YZ plane are arranged along the X axis (rise so as to be orthogonal to the electrodes 34a and 34b).

Although a case in which the twisted angle of the twisted nematic liquid crystal element is 90° has been described by way of example, the twisted angle is not limited to 90°. More specifically, the present invention is applicable to a twisted nematic liquid crystal element in which the twisted angle is within a range of 60° to 120°. In response to the change of the twisted angle of liquid crystal molecules from 90°, the polarization axes of the reflective polarizing plate 20 and the absorptive polarizing plate 40 are set in appropriate directions. By setting the twisted angle and the polarization axes in the range described above, good display characteristics can be obtained over a wide viewing angle range.

The difference in refractive index (birefringence) Δn of the liquid crystal layer 39 (liquid crystal material) is about 0.1. The thickness (cell thickness) d of the liquid crystal layer 39 is about 6.0 µm. The retardation Δnd of the liquid crystal optical element 30 is about 0.6 µm.

In the steady state (no voltage application state), the liquid crystal optical element 30 is in a state in which incident linearly polarized light is transmitted while changing its polarization axis. In a state (voltage application state) in which a voltage is applied to the liquid crystal layer 39 via the electrodes 34a and 34b, incident linearly polarized light is transmitted without changing its polarization axis.

Reference is again made to Fig. 1A. The absorptive polarizing plate40 is, for example, a dye polarizing plate, and transmits a polarized component in the Z-axis direction, and absorbs a polarized component in the Y-axis direction. For example, when natural light is incident, the light transmittance is 60%, and the degree of polarization is 49%. The polarizing plate 40 is disposed so as to face the liquid crystal optical element 30.

In the first example, when natural light is incident on the absorptive polarizing plate 40, a polarized component in the Z-axis direction (referred to as Z-axis polarized light) is transmitted through the absorptive polarizing plate 40. In the case where the liquid crystal optical element 30 is in the steady state, when the Z-axis polarized light transmitted through the absorptive polarizing plate 40 is incident on the liquid crystal optical element 30, the Z-axis polarized light is converted into a polarized component in the Y-axis direction (Y-axis polarized light) and is emitted (the polarization axis of the incident light is rotated by 90°). The Y-axis polarized light emitted from the liquid crystal optical element 30 is reflected by the reflective polarizing plate 20, is again incident on the liquid crystal optical element 30, and is converted into Z-axis polarized light. Then, the Z-axis polarized light transmitted through the liquid crystal optical element 30 reaches the absorptive polarizing plate 40.

As described above, when the liquid crystal optical element 30 is in the steady state, light incident on the absorptive polarizing plate 20 is reflected by the reflective polarizing plate 40. When the image display device 10 is observed from the absorptive polarizing plate 40 side, an image (surrounding scenery or the like) reflected by the reflective polarizing plate 20 is visually recognized. In other words, when the liquid crystal optical element 30 is in the steady state, the liquid crystal apparatus 100 is in the mirror state.

In the first example, the image display device 10 mainly outputs a polarized component in the Z-axis direction (Z-axis polarized light). The Z-axis polarized light output from the image display device 10 is transmitted through the reflective polarizing plate 20. In the case where the liquid crystal optical element is in the voltage application state, when the Z-axis polarized light transmitted through the reflective polarizing plate 20 is incident on the liquid crystal optical element 30, the Z-axis polarized light is emitted as it is (the polarization axis of the incident light is not changed). Then, the Z-axis polarized light emitted from the liquid crystal optical element 30 reaches the absorptive polarizing plate 40.

As described above, when the liquid crystal optical element 30 is in the voltage application state, the light emitted from the image display device 10 reaches the absorptive polarizing plate 40. When the image display device 10 is observed from the absorptive polarizing plate 40 side, an image (display image) displayed on the image display device 10 is mainly visually recognized. In other words, when the liquid crystal optical element 30 is in the voltage application state, the liquid crystal apparatus 100 is in the image display state.

The liquid crystal apparatus 100 capable of switching between the mirror state and the image display state can be applied, for example, to a vehicular rearview mirror. For example, it is conceivable to normally use the liquid crystal apparatus 100 as a rearview mirror in the mirror state, to switch to the image display state when necessary, and to display the temperature in the vehicle or the like.

When the liquid crystal apparatus 100 is applied to a vehicular rearview mirror, high light reflectance in the mirror state is more important than quality of a display image (brightness, sharpness, and the like of an image) in the image display state. The light reflectance of the liquid crystal apparatus 100 in the mirror state is preferably high, for example, 40% or more.

On the other hand, if the light reflectance is high even in the image display state, the surrounding scenery is reflected in the liquid crystal apparatus, making it difficult to see the image displayed by the display device 10. Therefore, the light reflectance of the liquid crystal apparatus 100 in the image display state is preferably low, for example, 15% or less.

The inventors studied changes in the light reflectance in the mirror state and the image display state when the light transmittance of the absorptive polarizing plate 40 was changed in the first embodiment. As a result, when the light transmittance of the absorptive polarizing plate 40 was set to 50%, the light reflectance in the mirror state was about 40%, and the light reflectance in the image display state was about 8%. When the light transmittance of the absorptive polarizing plate 40 was set to 60%, the light reflectance in the mirror state was about 42%, and the light reflectance in the image display state was about 12%. When the light transmittance of the absorptive polarizing plate 40 was set to 65%, the light reflectance in the mirror state was about 43%, and the light reflectance in the image display state was about 16%.

When the light transmittance of the absorptive polarizing plate 40 used in the conventional art was set to 45% for comparison, the light reflectance in the mirror state was about 36%, and the light reflectance in the image display state was about 6%. Accordingly, it can be seen that the light reflectance in the mirror state is higher in the first example than in the conventional art.

From the above study results, it is estimated that, in the liquid crystal apparatus 100 according to the first example, the range of the light transmittance of the absorptive polarizing plate 40 in which the light reflectance in the mirror state is 40% or more and the light reflectance in the image display state is 15% or less is 50% to 60%. The inventors further studied a liquid crystal apparatus that improves light reflectance in the mirror state and suppresses light reflectance in the image display state.

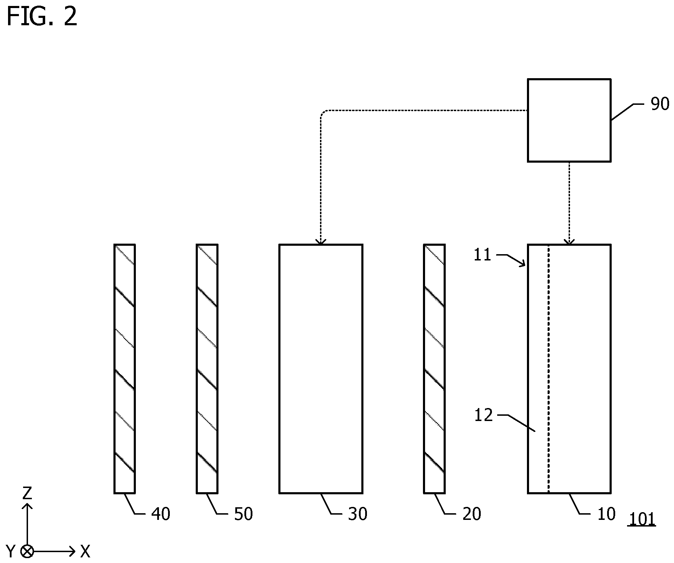

Fig. 2 is a diagram showing a liquid crystal apparatus 101 according to a second example of the present invention. The liquid crystal apparatus 101 according to the second example has substantially the same configuration as that of the liquid crystal apparatus 100 according to the first example (see Fig. 1A). In the liquid crystal apparatus 101 according to the second example a reflective polarizing plate 50 is interposed between a liquid crystal optical element 30 and an absorptive polarizing plate 40.

In other words, the liquid crystal apparatus 101 according to the second example includes an image display device 10 having a display surface 11, an absorptive polarizing plate 40 (a first polarizing plate) disposed so as to face the display surface 11 of the display device 10, a front-side reflective polarizing plate 50 (a third polarizing plate) disposed between the display device 10 and the absorptive polarizing plate 40, a liquid crystal optical element 30 disposed between the display device 10 and the reflective polarizing plate 50, and a rear-side reflective polarizing plate 20 (a second polarizing plate) disposed between the display device 10 and the liquid crystal optical element 30. The image display device 10, the rear-side reflective polarizing plate 20, the liquid crystal optical element 30, and the absorptive polarizing plate 40 according to the second example have the same structures and configurations as those of the first example.

As the front-side reflective polarizing plate 50 (third polarizing plate), for example, the same one as the rear-side reflective polarizing plate 20 (second polarizing plate) can be used. The front-side reflective polarizing plate 50 is, for example, a multilayer film polarizing plate, and transmits a polarized component in the Z-axis direction (Z-axis polarized light), and reflects a polarized component in the Y-axis direction (Y-axis polarized light). When natural light is incident, the light transmittance is 43%, and the light reflectance is 45%.

The inventors studied changes in the light reflectance in the mirror state and the image display state when the light transmittance of the absorptive polarizing plate 40 was changed in the second example. As a result, when the light transmittance of the absorptive polarizing plate 40 was set to 50%, the light reflectance in the mirror state was about 40%, and the light reflectance in the image display state was about 8%. When the light transmittance of the absorptive polarizing plate 40 was set to 60%, the light reflectance in the mirror state was about 45%, and the light reflectance in the image display state was about 12%.

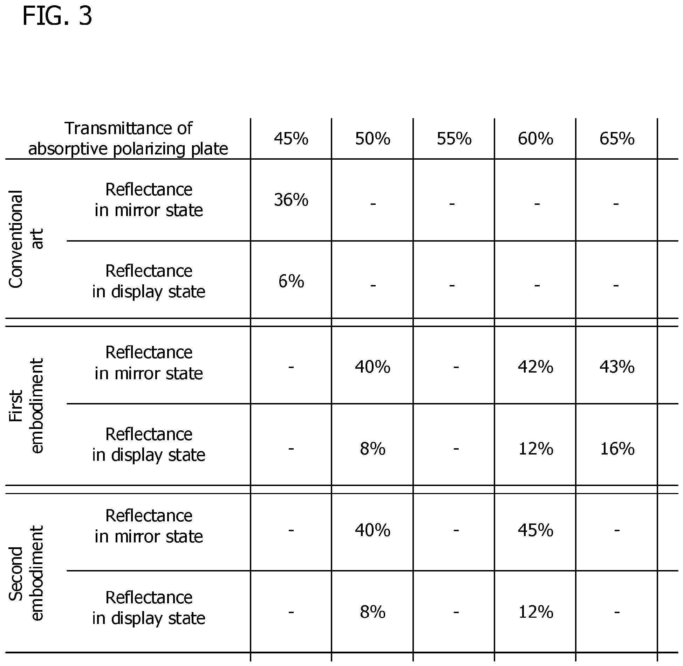

Fig. 3 is a table summarizing changes in the light reflectance in the mirror state and the image display state when the light transmittance of the absorptive polarizing plate 40 is changed in the first and second examples. From this table, it can be seen that the light reflectance in the mirror state of the liquid crystal apparatus 101 according to the second example is higher than that of the liquid crystal apparatus according to the first example, regardless of the light transmittance of the absorption polarizing plate 40. On the other hand, it can be seen that the light reflectance in the image display state of the liquid crystal apparatus 101 according to the second example is substantially the same as that of the liquid crystal apparatus according to the first example.

It is estimated that, in the liquid crystal apparatus 101 according to the second example, the range of the light transmittance of the absorptive polarizing plate 40 in which the light reflectance in the mirror state is 40% or more and the light reflectance in the image display state is 15% or less is 50% to 60%.

As described above, the liquid crystal apparatus according to the second example has a higher light reflectance in the mirror state than the liquid crystal apparatus according to the first example while suppressing the light reflectance in the image display state to the same degree as the liquid crystal apparatus according to the first example. For example, in the case of applying to a device that emphasizes the mirror function, such as a vehicular rearview mirror, the liquid crystal apparatus according to the second example may be preferable to the liquid crystal apparatus according to the first example.

According to further studies by the inventors, by adjusting the cell thickness d or the retardation Δnd of the liquid crystal optical element 30, the light reflectance of the liquid crystal apparatus is further improved. For example, when the light transmittance of the absorptive polarizing plate 40 was set to 50% and the retardation Δnd of the liquid crystal optical element 30 was changed from 0.6 µm to 0.9 µm, the light reflectance of the liquid crystal apparatus was improved from 40% to 41%. When the light transmittance of the absorptive polarizing plate 40 was set to 60% and the retardation Δnd of the liquid crystal optical element 30 was changed from 0.6 µm to 0.9 µm, the light reflectance of the liquid crystal apparatus was improved from 45% to 46%.

When the cell thickness d or the retardation Δnd of the liquid crystal optical element 30 is adjusted, the color of the image output from the liquid crystal apparatus (the reflection image in the mirror state and the display image in the image display state) also changes. Considering the light reflectance and the color of the output image, the retardation Δnd of the liquid crystal optical element 30 is preferably about 0.8 µm to 1.5 µm.

Hereinafter, with reference to Figs. 1A a and 2, a description will be given of a modification 1 of the liquid crystal apparatus according to the first example, a modification 2 of the liquid crystal apparatus according to the second example, embodiment; and a modification 3 of the liquid crystal apparatus according to the first example to which a chiral agent is not added for comparison.

In the modifications 1 to 3, similarly, the liquid crystal optical element 30 mainly includes a pair of electrodes 34a and 34b disposed opposite to each other, and a liquid crystal layer 39 provided between the pair of electrodes 34a and 34b.

Specifically, the pair of electrodes 34a and 34b are made of a light-transmitting conductive material such as indium tin oxide, and are provided on the surfaces of transparent glass substrates 32a and 32b, respectively. Orientation films 36a and 36b are provided so as to cover the pair of electrodes 34a and 34b. The orientation films 36a and 36b are subjected to a uniaxial orientation treatment such as a rubbing treatment. The liquid crystal layer 39 has an antiparallel orientation structure set at a pretilt angle of 89.5° when the in-plane direction of the substrate is 0°. The orientation of the pretilt angle is such that the angle formed by it and the polarization axes of the reflective polarizing plate 20 and the absorptive polarizing plate 40 at the center in the thickness direction of the liquid crystal layer 39 is 45°. In this case, the pretilt angle is preferably 89.0° to 89.9°.

A seal member 38 having a frame-like overall planar shape is provided between the pair of electrodes 34a and 34b (or the substrates 32a and 32b) and at the peripheral edges thereof. In a space surrounded by the electrodes 34a and 34b and the seal member 38, a vertical alignment (VA) liquid crystal material to which a chiral agent is added is used instead of a twisted nematic liquid crystal material to form the liquid crystal layer 39 of the liquid crystal optical element 30.

The retardation Δnd of the liquid crystal layers of the liquid crystal optical elements of the modifications 1 and 2 is, for example, within a range of 0.35 µm to 0.65 µm, specifically, 0.65 µm (Δn = 0.13, d = 5 µm). The chiral agent is added such that, for example, the ratio d/p of the cell thickness d to the chiral pitch (twist length of liquid crystal molecules) p is within a range of 0.25 to 0.33, specifically, 0.29 (chiral pitch p: 17.24 µm, cell thickness d: 5 µm).

On the other hand, in the modification 3, a vertical alignment (VA) liquid crystal material to which a chiral agent is not added is used to form the liquid crystal layer 39 of the liquid crystal optical element 30.

The retardation Δnd of the liquid crystal layer of the liquid crystal optical element of the modification 3 is, for example, within a range of 0.35 µm to 0.65 µm, specifically, 0.65 µm (Δn = 0.13, d = 5 µm).

The inventors studied changes in the light reflectance in the mirror state and the image display state when the light transmittance of the absorptive polarizing plate 40 was changed in the modifications 1 to 3. As a result, in the modification 1, when the light transmittance of the absorptive polarizing plate 40 was set to 60%, the light reflectance in the mirror state was about 46%, and the light reflectance in the image display state was about 13%. In the modification 2, when the light transmittance of the absorptive polarizing plate 40 was set to 60%, the light reflectance in the mirror state was about 49%, and the light reflectance in the image display state was about 13%. In the modification 3, when the light transmittance of the absorptive polarizing plate 40 was set to 60%, the light reflectance in the mirror state was about 46%, and the light reflectance in the image display state was about 29% (when driven at 5 V).

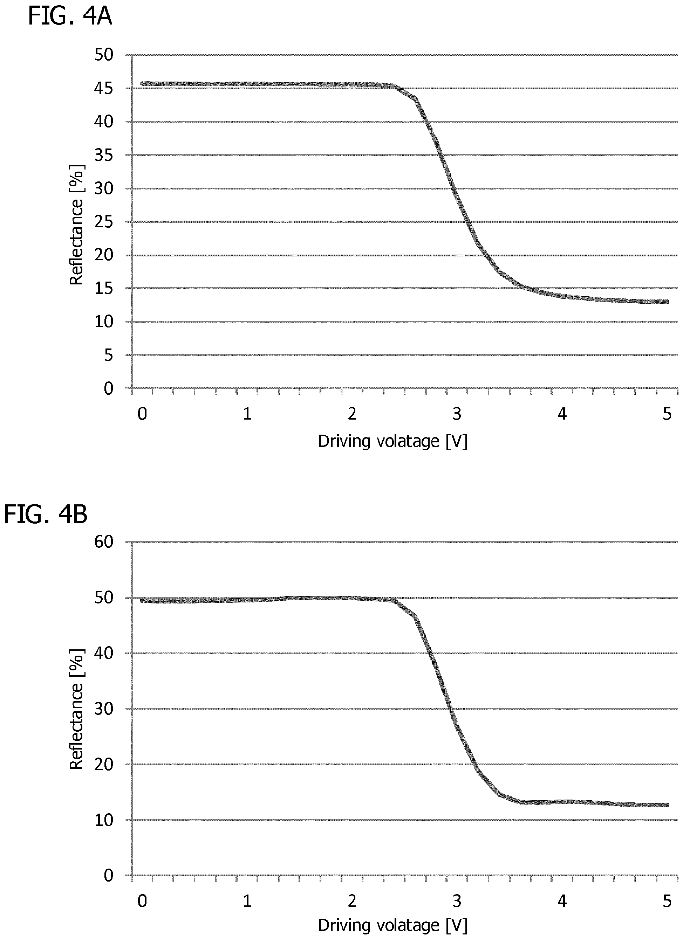

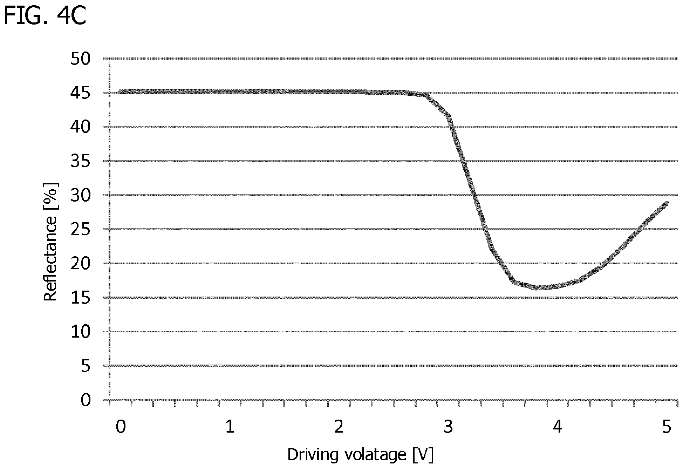

Figs. 4A to 4C show voltage-reflectance characteristics when the voltage applied to the liquid crystal optical elements of the modification 1 (Fig. 4A), the modification 2 (Fig. 4B), and the modification 3 (Fig. 4C) is changed. First, in the modification 3, as the applied voltage is increased, the reflectance gradually decreases, and the liquid crystal apparatus changes from the mirror state to the image display state. When the applied voltage is 3.8 V, the light reflectance is 16.4%, but when the applied voltage exceeds 3.8 V, the reflectance increases. Therefore, the light reflectance becomes high in the image display state. On the other hand, in the modifications 1 and 2, as the applied voltage is increased, the reflectance gradually decreases, and the liquid crystal apparatus changes from the mirror state to the image display state. As the applied voltage is increased, the light reflectance decreases to about 13% at a driving voltage of about 5 V.

A liquid crystal apparatus having better characteristics can be realized when the liquid crystal layer of the liquid crystal optical element is of the VA type than when the liquid crystal layer of the liquid crystal optical element is of the twisted nematic type.

Although the present invention has been described with reference to embodiments constituted by modifications 1 and 2, the present invention is not limited to these embodiments. For example, in the embodiments, the transmission axis of the polarizing plate and the liquid crystal molecular orientation direction of the liquid crystal optical element are set such that the liquid crystal apparatus is in the mirror state when the liquid crystal optical element is in the steady state, but the transmission axis of the polarizing plate and the liquid crystal molecular orientation direction of the liquid crystal optical element may be set such that the liquid crystal apparatus is in the image display state when the liquid crystal optical element is in the steady state. In addition, the surface of the absorptive polarizing plate or the like may be subjected to a low light reflection treatment to reduce the light reflection coefficient in the image display state. Further, each of the absorptive polarizing plate and the reflective polarizing plate may be composed of a plurality of the same type of polarizing plates. It will be apparent to those skilled in the art that various other modifications, substitutions, improvements and the like can be within the scope of the claims.

All examples and conditional language recited herein are intended for pedagogical purposes to aid the reader in understanding the invention and the concepts contributed by the inventors to furthering the art, and are to be construed as being without limitation to such specifically recited examples and conditions, nor does the organization of such examples in the specification relate to a showing of the superiority and inferiority of the invention. Although the embodiments of the invention have been described in detail, it should be understood that the various changes, substitutions, and alterations could be made hereto without departing from the scope of the invention as defined by the appended claims.

## Claims

1. A liquid crystal apparatus (100, 101) comprising:
a display device (10) having a display surface (11);
a first polarizing plate (40) categorized as absorption type, disposed so as to face the display surface (11) of the display device (10), the first polarizing plate (40) transmitting a first polarized light having a polarized component in a first direction and an absorbing a second polarized light having a polarized component in a second direction different from the first direction.;
a liquid crystal optical element (30) disposed between the display device (10) and the first polarizing plate (40) and capable of switching between a first and second state, the first state being a state in which the liquid crystal optical element (30) outputs the first polarized light when the first polarized light is incident to the liquid crystal optical element (30), and the second state being a state in which the liquid crystal optical element (30) outputs the second polarized light when the first polarized light is incident to the liquid crystal optical element (30); and
a second polarizing plate (20) categorized as reflection type and disposed between the display device (10) and the liquid crystal optical element (30), and arranged to reflect the first or the second polarized light through the liquid crystal element;
wherein the first polarizing plate (40) has a transmittance characteristic such that its transmittance of non-polarized light is 50% or more, wherein
the liquid crystal optical element (30) includes a liquid crystal layer (39) formed of a vertical alignment liquid crystal material and **characterized in that** a chiral agent is added to the liquid crystal material, and the ratio d/p of the thickness d of the liquid crystal layer (39) to the chiral pitch p is within a range of 0.250 to 0.325, and the retardation of the liquid crystal layer (39) is within a range of 0.35 µm to 0.65 µm.

2. The liquid crystal apparatus (101) according to claim 1, further comprising:
a third polarizing plate (50) categorized as reflection type and disposed between the display device (10) and the first polarizing plate (40).

3. The liquid crystal apparatus according to Claim 1 or 2, wherein the display device (10) includes a fourth polarizing plate (12) categorized as absorption type and disposed on the display surface (11).

## Patentansprüche

1. Flüssigkristallvorrichtung (100, 101), die Folgendes aufweist:
eine Anzeigevorrichtung (10) mit einer Anzeigefläche (11);
eine erste polarisierende Platte (40), die als ein Absorptionstyp kategoriesiert ist, die so angeordnet ist, dass sie zu der Anzeigefläche (11) der Anzeigevorrichtung (10) weist, wobei die erste polarisierende Platte (40) ein erstes polarisiertes Licht mit einer polarisierten Komponente in einer ersten Richtung durchlässt und ein zweites polarisiertes Licht mit einer polarisierten Komponente in einer zweiten Richtung, die sich von der ersten Richtung unterscheidet, absorbiert;
ein Flüssigkristalloptikelement (30), welches zwischen der Anzeigevorrichtung (10) und der ersten polarisierenden Platte (40) angeordnet ist und fähig ist, zwischen einem ersten und einem zweiten Zustand umzuschalten, wobei der erste Zustand ein Zustand ist, in welchem das Flüssigkristalloptikelement (30) das erste polarisierte Licht ausgibt, wenn das erstes polarisierte Licht auf das Flüssigkristalloptikelement (30) auftrifft, und wobei der zweite Zustand ein Zustand ist, in welchem das Flüssigkristalloptikelement (30) das zweite polarisierte Licht ausgibt, wenn das erste polarisierte Licht auf das Flüssigkristalloptikelement (30) auftrifft; und
eine zweite polarisierende Platte (20), die als Reflexionstyp kategorisiert ist und zwischen der Anzeigevorrichtung (10) und dem Flüssigkristalloptikelement (30) angeordnet ist und so angeordnet ist, dass sie das erste oder das zweite polarisierte Licht durch das Flüssigkristallelement reflektiert;
wobei die erste polarisierende Platte (40) eine Durchlasscharakteristik derart hat, dass ihre Durchlässigkeit für nicht polarisiertes Licht 50% oder mehr ist,
wobei das Flüssigkristalloptikelement (30) eine Flüssigkristallschicht (39) hat, die aus einem Vertikalausrichtungs- bzw. VL-Flüssigkristallmaterial geformt ist und **dadurch gekennzeichnet ist, dass**
eine chirales Mittel zu dem Flüssigkristallmaterial hinzugegeben ist und
das Verhältnis d/p der Dicke d der Flüssigkristallschicht (39) zu der chiralen Teilung p innerhalb eines Bereiches von 0,250 bis 0,325 ist und die Verzögerung der Flüssigkristallschicht (39) in einem Bereich von 0,35 µm bis 0,65 µm ist.

2. Flüssigkristallvorrichtung (101) nach Anspruch 1, die weiter Folgendes aufweist:
eine dritte polarisierende Platte (50), die als Reflexionstyp kategorisiert ist und zwischen der Anzeigevorrichtung (10) und der ersten polarisierenden Platte (40) angeordnet ist.

3. Flüssigkristallvorrichtung nach Anspruch 1 oder 2, wobei die Anzeigevorrichtung (10) eine vierte polarisierende Platte (12) aufweist, die als Absorptionstyp kategorisiert ist und auf der Anzeigefläche (11) angeordnet ist.

## Revendications

1. Appareil à cristaux liquides (100, 101) comprenant :
un dispositif d'affichage (10) ayant une surface d'affichage (11) ;
une première plaque de polarisation (40) classée comme étant du type à absorption, disposée de sorte à faire face à la surface d'affichage (11) du dispositif d'affichage (10), la première plaque de polarisation (40) transmettant une première lumière polarisée ayant une composante polarisée dans une première direction et absorbant une deuxième lumière polarisée ayant une composante polarisée dans une deuxième direction différente de la première direction ;
un élément optique à cristaux liquides (30) disposé entre le dispositif d'affichage (10) et la première plaque de polarisation (40) et capable de commuter entre un premier et un deuxième état, le premier état étant un état dans lequel l'élément optique à cristaux liquides (30) fournit la première lumière polarisée lorsque la première lumière polarisée est incidente sur l'élément optique à cristaux liquides (30), et le deuxième état étant un état dans lequel l'élément optique à cristaux liquides (30) fournit la deuxième lumière polarisée lorsque la première lumière polarisée est incidente sur l'élément optique à cristal liquide (30) ; et
une deuxième plaque de polarisation (20) classée comme étant du type à réflexion et disposée entre le dispositif d'affichage (10) et l'élément optique à cristaux liquides (30), et agencée pour réfléchir la première ou la deuxième lumière polarisée à travers l'élément à cristaux liquides ;
dans lequel la première plaque de polarisation (40) a une caractéristique de transmittance telle que sa transmittance de lumière non polarisée est de 50 % ou plus,
dans lequel l'élément optique à cristaux liquides (30) comporte une couche à cristaux liquides (39) constituée d'un matériau à cristaux liquides à alignement vertical et **caractérisé en ce qu'**un agent chiral est ajouté au matériau à cristaux liquides, et le rapport d/p de l'épaisseur d de la couche à cristaux liquides (39) sur le pas chiral p est dans une plage allant de 0,250 à 0,325, et le retard de la couche à cristaux liquides (39) est dans une plage allant de 0,35 µm à 0,65 µm.

2. Appareil à cristaux liquides (101) selon la revendication 1, comprenant en outre :
une troisième plaque de polarisation (50) classée comme étant du type à réflexion et disposée entre le dispositif d'affichage (10) et la première plaque de polarisation (40).

3. Appareil à cristaux liquides (101) selon la revendication 1 ou 2, dans lequel le dispositif d'affichage (10) comporte une quatrième plaque de polarisation (12) classée comme étant du type à absorption et disposée sur la surface d'affichage (11) .
